# EUROPEAN PATENT APPLICATION

(11) **EP 4 160 215 A1**
(43) Date of publication of application: **05.04.2023**
(21) Application number: 21814353.5
(22) Date of filing: 05.02.2021
(51) Int. Cl.: G01N 35/00, G01N 35/04

(54) **AUTOMATIC ANALYSIS DEVICE AND MAINTENANCE METHOD FOR AUTOMATIC ANALYSIS DEVICE**

(30) Priority: 29.05.2020 JP 2020094322
(71) Applicant: HITACHI HIGH-TECH CORPORATION, Tokyo 105-6409 (JP)
(72) Inventor: HORIUCHI Rie, Tokyo 105-6409 (JP); SHICHIJI Masaru, Tokyo 105-6409 (JP)
(74) Representative: Strehl Schübel-Hopf & Partner
(86) International application number: PCT/JP2021/004441
(87) International publication number: WO 2021/240899

(57) **Abstract**

A maintenance method in an automatic analysis apparatus includes: a recognition step of recognizing an integrated rack 301A, 301B, 301C mounted with a cleaning solution container containing a cleaning solution, and a calibrator container containing a calibrator or a QC specimen container containing a QC specimen containing a sample having a known concentration; a cleaning solution supply step of aspirating a cleaning solution; and a supply step of aspirating the calibrator or aspirating the QC specimen, in which the cleaning solution supply step and the supply step are continuously performed from the cleaning solution container and the calibrator container or the QC specimen container mounted on the integrated rack 301A, 301B, 301C. Accordingly, an automatic analysis apparatus and a maintenance method in the automatic analysis apparatus that can reduce a burden on a user in calibration and the like during maintenance are provided.

## Description

### Technical Field

The present invention relates to an automatic analysis apparatus that performs a quantitative and qualitative analysis of a biological sample such as blood and urine and a maintenance method in the automatic analysis apparatus.

### Background Art

As an example of a container containing a cleaning solution for a blood analysis device that can be automatically handled by the blood analysis device and can store a chlorine-based cleaning solution for a long period of time in a state of maintaining a cleaning power, PTL 1 discloses that a cleaning solution container includes: a blood-collection-tube-shaped container main body having an opening portion in an upper portion thereof and made of a thermoplastic resin having resistance to a chlorine-based cleaning solution; a chlorine-based cleaning solution contained in the container main body; and a laminated film joined to the container main body and covering the opening portion, in which a barcode is attached to the container main body to identify the cleaning solution container, and the laminated film includes a seal layer thermally welded to the container main body, and a gas barrier layer disposed on an outer side of the seal layer with respect to the container main body.

### Citation List

### Patent Literature

PTL 1: JP-A-2013-210320

### Summary of Invention

### Technical Problem

Automatic analysis apparatuses that analyze a component contained in a specimen such as blood include a module type in which once a specimen container containing a specimen is loaded from a loading port of a rack supply unit in a state of being mounted on a specimen rack, conveyance of the specimen container to an analysis unit via a conveyance line configured with a single or a plurality of conveyance mechanisms and output of an analysis result such as a concentration of a target component in the specimen are executed automatically.

When the automatic analysis apparatus is used for a long period of time, dirt accumulates in a fluid system such as a flow path, a valve, and the analysis unit. The dirt causes a decrease in accuracy and an operation failure. Therefore, it is necessary to clean the fluid system through periodic maintenance.

Here, the module-type automatic analysis apparatus includes a portion configured to, during maintenance, mount a cleaning rack for mounting the cleaning container containing the cleaning solution on the conveyance line instead of using the above-described specimen rack, convey the cleaning rack, and clean the fluid system in the apparatus by dispensing the cleaning solution and filling the flow path with the cleaning solution.

PTL 1 discloses a technique for enabling the cleaning solution container to be mounted on the rack in the same manner as the blood collection tube as a specimen container and enabling automatic handling by the automatic analysis apparatus while maintaining the cleaning power for a long period of time by using the blood-collection-tube-shaped cleaning solution container whose opening portion is covered by the laminated film including the gas barrier layer.

When cleaning of the fluid system is performed as maintenance, it may be necessary to execute calibration, which is processing of measuring values such as light quantities and potentials of some standard solution samples having known concentrations of items to be analyzed (calibrators) in advance in a state after cleaning, creating calibration curve data indicating a relationship between the concentrations and these values, and calculating a measurement value (concentration) of a specimen based on the calibration curve data.

This corresponds to, for example, a case of electrolyte analysis (ISE), in which an analysis environment is changed by cleaning and accuracy of analysis is reduced when previously acquired calibration result is used.

Even when calibration is not necessary, it may be necessary to execute quality control (hereinafter referred to as QC) measurement in order to confirm whether the calibration curve can be used as it is.

Therefore, the device may be set to invalidate a calibration/QC result and disable resume of measurement until a new calibration/QC result is acquired.

In the related art, when performing calibration/QC after cleaning, a user needs to set the standard solution specimen container/QC specimen container containing the standard solution sample/QC specimen on a calibration/QC rack prepared separately from the cleaning rack and load the standard solution specimen container/QC specimen container into the device even when the cleaning container as disclosed in PTL 1 is used, which takes labor and time.

PTL 1 describes that the cleaning solution container is automatically handled by the above-described configuration, but has not considered how calibration/QC is performed after cleaning, and there is room for improvement as well.

The present invention has been made in view of the above-described problems, and provides an automatic analysis apparatus and a maintenance method in the automatic analysis apparatus that can reduce a burden on a user in calibration and the like during maintenance.

### Solution to Problem

The present invention includes a plurality of means for solving the above-described problems, and as an example thereof, there is provided: an automatic analysis apparatus including: an identification device configured to identify a rack attached with identification information; and a control unit configured to control an operation of dispensing a liquid contained in a container housed in the rack based on information on the rack identified by the identification device, in which when recognizing an integrated rack mounted with a cleaning solution container containing a cleaning solution and a calibrator container containing a calibrator, after a cleaning solution supply step of aspirating the cleaning solution, the control unit causes to continuously perform a calibrator supply step of aspirating the calibrator from the cleaning solution container and the calibrator container mounted on the integrated rack.

### Advantageous Effects of Invention

According to the present invention, it is possible to reduce a burden on a user in calibration and the like during maintenance. Problems, configurations, and effects other than those described above will be clarified by the following description of an embodiment.

### Brief Description of Drawings

FIG. 1 is a diagram showing a basic configuration of an automatic analysis apparatus according to the present embodiment.
FIG. 2 is a diagram showing a basic configuration of an electrolyte analysis unit (ISE) according to the present embodiment.
FIG. 3 is a diagram showing a basic configuration of a specimen rack mounted with specimen containers according to the present embodiment.
FIG. 4 is a diagram showing an example of an arrangement configuration of cleaning solutions or calibrators at positions of a cleaning-calibration integrated rack according to the present embodiment.
FIG. 5 is a diagram showing an example of an arrangement configuration of cleaning solutions or controls at positions of a cleaning-control integrated rack according to the present embodiment.
FIG. 6 is a diagram showing other arrangement configurations at positions of a cleaning-calibration/control integrated rack according to the present embodiment.
FIG. 7 is a diagram showing arrangement configurations at positions of a cleaning-calibration-control integrated rack according to the present embodiment.
FIG. 8 is a flowchart showing an example of a flow of a cleaning step to a calibration step when the cleaning-calibration integrated rack according to the present embodiment is conveyed.
FIG. 9 is a continuation of FIG. 8, and is a flowchart showing the example of the flow of the cleaning step to the calibration step when the cleaning-calibration integrated rack is conveyed.
FIG. 10 is a continuation of FIG. 8, and is a flowchart showing the example of the flow of the cleaning step to the calibration step when the cleaning-calibration integrated rack is conveyed.
FIG. 11 is a flowchart showing an example of a flow of a cleaning step to a control step when the cleaning-control integrated rack according to the present embodiment is conveyed.
FIG. 12 is a continuation of FIG. 11, and is a flowchart showing the example of the flow of the cleaning step to the control step when the cleaning-control integrated rack is conveyed.
FIG. 13 is a continuation of FIG. 11, and is a flowchart showing the example of the flow of the cleaning step to the control step when the cleaning-control integrated rack is conveyed.
FIG. 14 is a diagram showing an example of a maintenance guide screen of the automatic analysis apparatus according to the present embodiment.

### Description of Embodiments

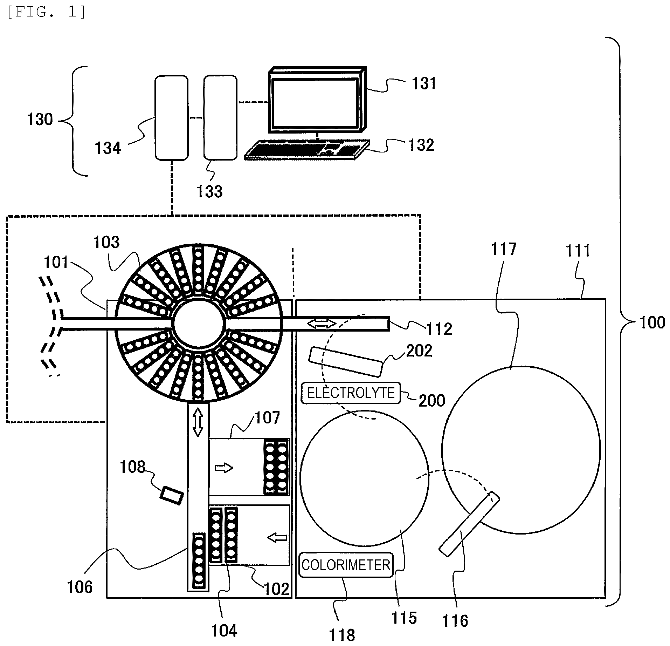

Embodiments of an automatic analysis apparatus and a maintenance method in the automatic analysis apparatus of the present invention will be described with reference to FIGS. 1 to 14.

First, an overall configuration and an operation of the automatic analysis apparatus of the present embodiment will be described with reference to FIG. 1. FIG. 1 is a diagram schematically showing the overall configuration of the automatic analysis apparatus of the present embodiment.

An automatic analysis apparatus 100 shown in FIG. 1 includes a conveyance unit 101, an analysis unit 111, and an operation unit 130.

The conveyance unit 101 is a unit for loading into the automatic analysis apparatus 100, collection and conveyance in the automatic analysis apparatus 100 of a specimen rack 104 mounted with one or more specimen containers containing biological samples (specimens) to be analyzed such as blood and urine, and supply of the specimens to the analysis unit 111.

The conveyance unit 101 includes a rack buffer 103, a rack supply tray 102, a rack storage tray 107, and a conveyance line 106.

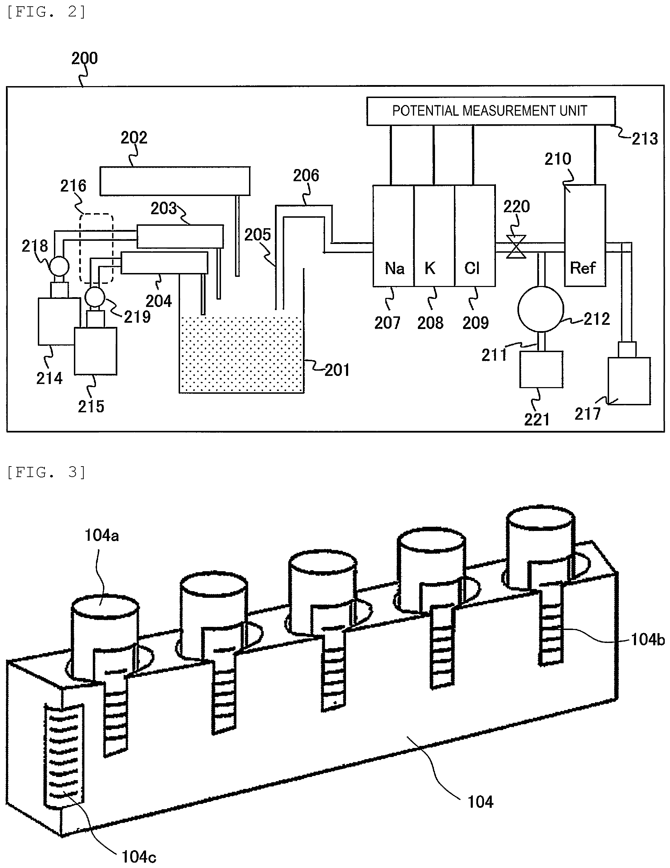

In the conveyance unit 101, the specimen rack 104 installed on the rack supply tray 102 is conveyed to the rack buffer 103 by the conveyance line 106. A specimen information reading device 108 such as a sensor is provided in the middle of the conveyance line 106, and reads an identification medium such as an RFID or a barcode provided on the specimen rack 104 (see FIG. 3) to recognize the identification information.

The rack buffer 103 has a rotor structure that performs circular motion, and an outer circumference thereof has slots that radially hold a plurality of specimen racks 104, each of which is mounted with a plurality of specimen containers on concentric circles. When the slots are rotated by a motor, any specimen rack 104 is carried in or carried out to or from the analysis unit 111 of a request destination. With such a structure, it is possible to process the specimen racks 104 without being limited to an order of entering. That is, when a specimen rack has a high priority, the specimen rack can be processed first.

The conveyance line 106 is connected to a certain point on a radial circumference of the rack buffer 103 to carry the specimen rack 104 in and out. Assuming that this point is a position of 0° on the circumference, a specimen dispensing line 112 for drawing the specimen rack 104 into the analysis unit 111 described later is connected to a position of 90° on the circumference from a position to which the conveyance line 106 is connected to carry the specimen rack 104 in and out.

After finishing dispensing in the analysis unit 111, the specimen rack 104 can wait for an output of a measurement result in the rack buffer 103 and perform processing such as automatic retest as necessary. Further, when the processing is finished, the specimen rack 104 is conveyed to the rack storage tray 107 via the conveyance line 106.

The analysis unit 111 is a unit that performs a measurement operation of a measurement item requested for a sample and outputs a measurement result, and is connected to the conveyance unit 101.

The analysis unit 111 includes a reaction disk 115, a reagent disk 117, the specimen dispensing line 112, a reagent dispensing nozzle 116, a specimen dispensing nozzle 202, a colorimetric measurement unit 118, and an electrolyte measurement unit 200.

Reaction containers (not shown) are arranged on a circumference of the reaction disk 115. The specimen dispensing line 112, into which the specimen rack 104 with the specimen containers placed thereon is carried, is installed near the reaction disk 115.

The specimen dispensing nozzle 202, which can be rotated and moved up and down, is installed between the reaction disk 115 and the specimen dispensing line 112. The specimen dispensing nozzle 202 moves while drawing an arc around a rotation axis to dispense the sample from the specimen rack 104 to the reaction containers on the reaction disk 115 or a dilution tank 201 (see FIG. 2) in the electrolyte measurement unit 200.

The reagent disk 117 is a storage cabinet whose circumference can be mounted with a plurality of reagent bottles (not shown) containing reagents therein. The reagent disk 117 is kept cold.

The reagent dispensing nozzle 116, which can be rotated and moved up and down, is installed between the reaction disk 115 and the reagent disk 117. The reagent dispensing nozzle 116 moves while drawing an arc around a rotation axis to access an inside of the reagent disk 117 from a reagent dispensing nozzle aspiration port and dispense a reagent from a reagent bottle to a reaction container.

Further, cleaning tanks (not shown) are installed in operation ranges of the reagent dispensing nozzle 116 and the specimen dispensing nozzle 202, respectively.

The electrolyte measurement unit 200 and the colorimetric measurement unit 118 are arranged around the reaction disk 115.

The electrolyte measurement unit 200 is an analysis unit that measures an electrolyte concentration in a specimen by using ion selective electrodes. Details thereof will be described later with reference to FIG. 2.

The colorimetric measurement unit 118 is an analysis unit that performs analysis of biochemical components in a sample by measuring absorbance of a reaction solution generated by performing mixing and reaction in a reaction container on the reaction disk 115, and executes analysis of an analysis item having a measurement principle different from that of the electrolyte measurement unit 200. The colorimetric measurement unit 118 includes a light source, a spectrophotometer, and the like.

The operation unit 130 is a portion that functions to control information of the entire automatic analysis apparatus 100, and includes a display unit 131, an input unit 132, a recording unit 133, and a control unit 134. The operation unit 130 is connected to the analysis unit 111 and the conveyance unit 101 by a wired or wireless network line.

The display unit 131 is a portion for displaying various screens such as an operation screen for ordering measurement items to be measured for a sample to be measured and a screen for confirming a measurement result, and is configured with a liquid crystal display or the like. The display unit 131 is not necessarily a liquid crystal display, and may be replaced with a printer or the like. The display and the printer or the like can be used as a touch panel type display that also serves as the input unit 132 described later.

The input unit 132 is a portion for inputting various parameters, settings, measurement results, measurement request information, analysis start and stop instructions, and the like based on an operation screen displayed on the display unit 131, and is configured with a keyboard, a mouse, or the like.

The recording unit 133 is a portion that stores a time chart and operation parameters necessary for an operation of each device that constitutes the automatic analysis apparatus 100, various information for identifying a biological sample, measurement results, and the like, and is configured with a storage medium such as a semiconductor memory such as a flash memory or a magnetic disk such as an HDD.

The control unit 134 is a portion that controls an operation of the entire automatic analysis apparatus 100, and is connected to devices in the conveyance unit 101 to execute control of an operation of conveying an appropriate specimen rack 104 from the rack buffer 103 to the specimen dispensing line 112 and a conveyance operation of returning the specimen rack 104 from the specimen dispensing line 112 to the rack buffer 103.

The control unit 134 is connected to devices in the analysis unit 111 described above, and controls an analysis operation by constituent devices of the electrolyte measurement unit 200 and the colorimetric measurement unit 118.

Further, the control unit 134 calculates a concentration of a specific component in a measurement target based on absorbance or the like measured by the colorimetric measurement unit 118, and calculates an ion concentration of the measurement target based on a potential or the like measured by the electrolyte measurement unit 200.

Particularly, the control unit 134 of the present embodiment controls operations of dispensing mechanisms of liquids contained in the containers housed in the specimen rack 104 and an integrated rack 301A, 301B, 301C and operations of the mechanisms thereafter based on information of the specimen rack 104 and the integrated rack 301A, 301B, 301C identified by the specimen information reading device 108.

For example, when recognizing the integrated rack 301A, 301C mounted with a cleaning solution container containing a cleaning solution and a calibrator container that holds a calibrator, after a cleaning solution supply step of aspirating the cleaning solution, the control unit 134 causes to continuously perform a calibrator supply step of aspirating a calibrator from the cleaning solution container and the calibrator container mounted on the integrated rack 301A, 301C.

When recognizing the integrated rack 301B, 301C mounted with a cleaning solution container containing a cleaning solution and a QC specimen container containing a QC specimen containing a sample of a known concentration, after the cleaning solution supply step of aspirating the cleaning solution, the control unit 134 causes to continuously perform a control measurement step of aspirating the QC specimen from the cleaning solution container and the QC specimen container mounted on the integrated racks 301B and 301C. Details thereof will be described later.

Such a control unit 134 may be implemented using a general-purpose computer or may be implemented as a function of a program executed on a computer.

That is, processing of the control unit 134 may be implemented by storing program codes in a recording unit such as a memory and executing program codes by a processor such as a central processing unit (CPU).

The control unit 134 may be configured with hardware such as a dedicated circuit board.

The present embodiment describes a case where the analysis units are the colorimetric measurement unit 118 and the electrolyte measurement unit 200, but the analysis units are not limited to a colorimetric measurement unit that measures a biochemical item or an electrolyte measurement unit that measures an electrolyte item. For example, a measurement unit or the like that measures an immunity item can be used. Further, the analysis unit may be configured with an electrolyte measurement unit, a colorimetric measurement unit, or the like alone.

A case where the automatic analysis apparatus 100 includes one analysis unit 111 has been described, but two or more analysis units can be provided. In this case, a type of the analysis unit is not particularly limited as well, and one or more of each type of analysis units such as a biochemical analysis unit, an immunity analysis unit, and a blood coagulation analysis unit can be provided.

Next, an outline of a mechanism operation of the automatic analysis apparatus 100 shown in FIG. 1 will be described.

The conveyance unit 101 sends out the specimen racks 104 installed on the rack supply tray 102 of the automatic analysis apparatus 100 onto the conveyance line 106 one rack at a time, and carries the specimen racks 104 into the rack buffer 103. The specimen rack 104 conveyed to the rack buffer 103 is conveyed to the specimen dispensing line 112 of the analysis unit 111.

When the specimen rack 104 reaches the specimen dispensing line 112, the specimen dispensing nozzle 202 performs a dispensing operation on the samples mounted on the specimen rack 104 in accordance with a measurement item requested by the operation unit 130.

When the measurement item is the biochemical item, the specimen dispensing nozzle 202 discharges an aspirated sample to a reaction container on the reaction disk 115, further adds a reagent aspirated from the reagent disk 117 by the reagent dispensing nozzle 116 to the reaction container, and stirs the reagent. Thereafter, the absorbance is measured by the colorimetric measurement unit 118, and a measurement result is transmitted to the control unit 134 of the operation unit 130.

When the requested measurement item is the electrolyte item, the specimen dispensing nozzle 202 discharges the aspirated specimen to the dilution tank 201 of the electrolyte measurement unit 200, an electromotive force is measured by the ion selective electrodes 207, 208, and 209, and a measurement result is transmitted to the control unit 134 of the operation unit 130. However, in a case of the electrolyte item measurement, as described above, a pre-measurement operation of measuring an electromotive force of an internal standard solution having a known concentration is necessary before dispensing a sample.

The control unit 134 of the operation unit 130 calculates a concentration of a specific component in the sample by arithmetic processing based on the transmitted measurement result. A user is notified of an analysis result via the display unit 131, and the analysis result is recorded in the recording unit 133.

Next, an outline of the electrolyte measurement unit using the ion selective electrodes will be described with reference to FIG. 2. FIG. 2 is a schematic diagram showing an example of the electrolyte measurement unit (ISE) using the ion selective electrodes.

The electrolyte measurement unit 200 is disposed in the analysis unit 111 which automatically analyzes a sample.

The electrolyte measurement unit 200 includes the dilution tank 201, a diluted solution dispensing nozzle 203, an internal standard solution dispensing nozzle 204, a sample solution aspiration nozzle 205, a pipe 206, a sodium ion selective electrode 207, a potassium ion selective electrode 208, a chloride ion selective electrode 209, a reference electrode 210, a pipe 211, a sipper syringe 212, a potential measurement unit 213, a temperature control unit 216, and the like.

The specimen dispensing nozzle 202 dispenses and discharges a sample such as blood or urine to the dilution tank 201. The diluted solution dispensing nozzle 203 dispenses and discharges a diluted solution to the dilution tank 201. The internal standard solution dispensing nozzle 204 dispenses and discharges an internal standard solution to the dilution tank 201.

The diluted solution is fed from a diluted solution container 214 to the diluted solution dispensing nozzle 203 by using a diluted solution syringe (DIL syringe) 218. The internal standard solution is fed from an internal standard solution container 215 to the internal standard solution dispensing nozzle 204 by using an internal standard solution syringe (IS syringe) 219. The solution-feeding device is not limited to the syringe, and a pump can be used instead of each syringe.

The temperature control unit 216 is disposed in flow paths of the diluted solution and the internal standard solution, and controls a temperature to a constant temperature (for example, 37°C) in the middle of feeding each solution. The flow path in the vicinity of the temperature control unit 216 has a flow path volume larger than those of other portions, so that temperature control efficiency can also be increased.

The sample solution aspiration nozzle 205 can be moved up and down, and aspirates a solution in the dilution tank 201 by a driving force of the sipper syringe 212. The aspirated solution is introduced into flow paths of the ion selective electrodes 207, 208, and 209 through the pipe 206, and is further drained to a waste solution portion 221 through the pipe 211.

In the electrolyte measurement unit 200, the sample solution aspiration nozzle 205, the pipe 206, the pipe 211, and the sipper syringe 212 are used as a sample introduction portion that introduces a sample solution containing an electrolyte. The sample solution is introduced into the flow paths of the ion selective electrodes 207, 208, and 209 by using the sample introduction portion.

Further, a comparison electrode solution is introduced from a comparison electrode solution container 217 to the reference electrode 210 by the pipe 211 and the sipper syringe 212. The comparison electrode solution is switched to another flow path by using a valve 220 or the like in order to prevent the comparison electrode solution from flowing into the ion selective electrodes 207, 208, and 209.

Terminals of the ion selective electrodes 207, 208, and 209 and the reference electrode 210 are connected to the potential measurement unit 213, and a potential difference among the electrodes is measured in a state where the sample solution is introduced.

The valve 220 is provided in a flow path between the chloride ion selective electrode 209 and the reference electrode 210, and the cleaning solution is drained to the waste solution portion 221 through the pipe 211 by switching the valve 220.

FIG. 3 is a diagram showing a configuration mounted with five specimen containers as the specimen rack according to the present embodiment. The number of the specimen containers that can be mounted is not limited to five, and may be any number of one or more. A configuration mounted with ten or more can also be used.

As shown in FIG. 3, a label 104c indicating information for identifying the specimen racks (for example, a barcode, numbers, and characters) is attached to the specimen rack 104 serving as a support body for mounting one or more specimen containers 104a. Further, a label 104b indicating specimen information including a specimen reception number, patient information such as a patient name and an age, an examination item name, and the like by a barcode or the like is adhered to an outer wall of each specimen container 104a.

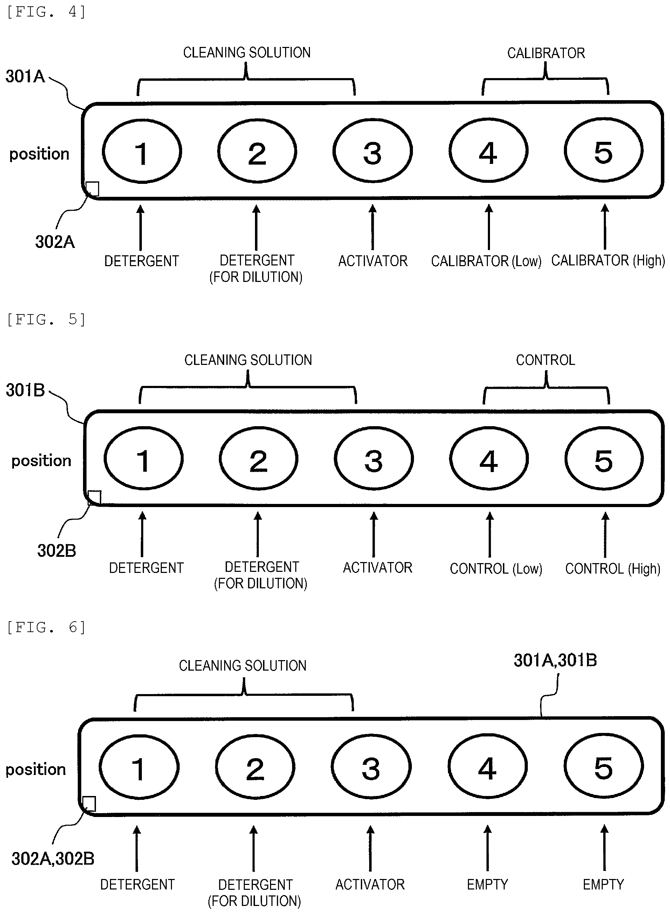

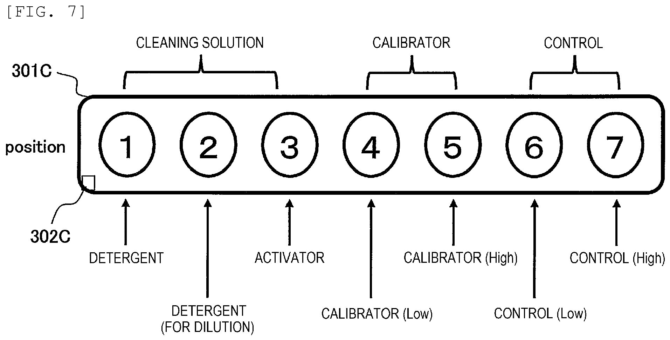

Next, details of the integrated rack of the present embodiment will be described with reference to FIGS. 4 to 7. FIG. 4 is a diagram showing an example of an arrangement configuration of cleaning solutions or calibrators at positions of a cleaning-calibration integrated rack. FIG. 5 is a diagram showing an example of an arrangement configuration of cleaning solutions or controls at positions of a cleaning-control integrated rack. FIG. 6 is a diagram showing other arrangement configurations at positions of a cleaning-calibration/control integrated rack. FIG. 7 is a diagram showing arrangement configurations at positions of a cleaning-calibration-control integrated rack.

An integrated rack 301A shown in FIG. 4 is a cleaning-calibration integrated rack, and is mounted with a container containing a detergent at a position 1, a container containing a detergent for dilution at a position 2, a container containing an activator at a position 3, a container containing a calibrator having a relatively low concentration at a position 4, and a container containing a calibrator having a concentration higher than that of the calibrator of the position 4 at a position 5.

An integrated rack 301B shown in FIG. 5 is a cleaning-control integrated rack, and is mounted with a container containing a detergent at a position 1, a container containing a detergent for dilution at a position 2, a container containing an activator at a position 3, a QC specimen container containing a QC specimen containing a sample having a known concentration in which a concentration is relatively low at a position 4, and a QC specimen container having a concentration higher than that of a QC specimen of a position container at a position 5.

As shown in FIGS. 4 to 6, in these integrated racks 301A and 301B, two calibrator containers or two QC specimen containers can be mounted on two positions 4 and 5. It is also possible to allow three or more calibrator containers or QC specimen containers to be mounted, or to allow one calibrator container or QC specimen container to be mounted.

Further, an integrated rack 301C shown in FIG. 7 can be mounted with a cleaning solution container, a calibrator container, and a QC specimen container. The integrated rack 301C has an entire length of the rack the same as those of the integrated racks 301A and 301B, and has a narrower interval between the containers. A case where a cleaning + calibration + QC integrated rack 301C having a changed interval between the containers without changing the rack length is described, but an entire length of a rack per se can be increased without changing the interval between the containers, or a width of the rack can be increased to form a rack in which two or more rows are arranged. In these cases, a countermeasure of appropriately changing dispensing or conveying parameters such as a movement distance of the dispensing nozzle or a conveyance distance of the conveyance mechanism can be considered, but other methods may be used as countermeasures as well.

In the present embodiment, as shown in FIGS. 4, 5, and 7, identification media 302A, 302B, and 302C described above are also respectively provided on the integrated racks 301A, 301B, and 301C, and the specimen information reading device 108 can read the identification information, which is similar to the specimen rack 104.

In these integrated racks 301A, 301B, and 301C, unlike the specimen container 104a mounted on the specimen rack 104 shown in FIG. 3, it is possible not to provide the identification medium for each container. In this case, the processing can proceed at a stage where whether the rack per se or a container is mounted is identified, and the processing can proceed quickly.

It is possible to adopt a form such that, like the specimen container 104a, an identification medium that stores identification information such as a barcode is provided on each container such as the cleaning container, the calibrator container, and the QC specimen container, and the specimen information reading device 108 recognizes the identification information for each container. In this case, as described later, the processing can proceed even when a predetermined container is not placed at a predetermined position.

Therefore, a form suitable for an operation policy or the like can be appropriately adopted for presence or absence of the identification medium of each container.

As shown in these FIGS. 4, 5, and 7, in the integrated rack 301A, 301B, 301C, the cleaning solution container and either the calibrator container or the QC specimen container are housed in predetermined positions determined in advance.

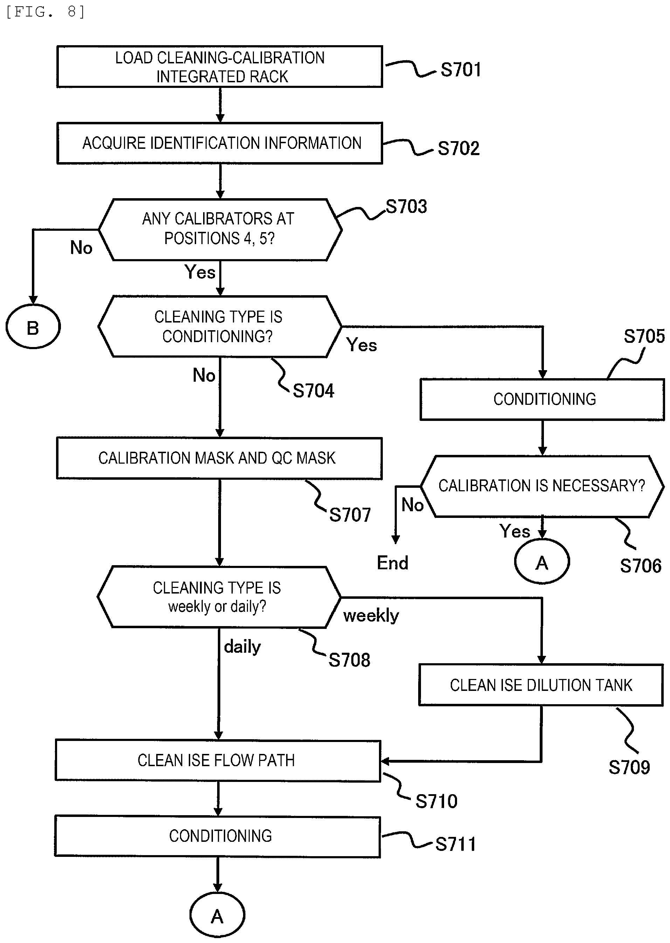

Next, a control flow when a cleaning step and a calibration step according to the present embodiment are continuously performed will be described with reference to FIGS. 8 to 10. FIGS. 8 to 10 are flowcharts showing an example of a flow of the cleaning step to the calibration step when the cleaning-calibration integrated rack is conveyed.

Here, an aspect where flow paths (the pipe 206 and the like) and/or the dilution tank 201 of the electrolyte measurement unit 200 in the automatic analysis apparatus 100 shown in FIG. 1 is cleaned will be described as an example of the cleaning step. In addition, the cleaning step can be widely applied to, for example, cleaning a flow path in an analysis device such as an immunity analysis device or a flow cytometry.

As shown in FIG. 8, first, when the integrated rack 301A as shown in FIG. 4 is loaded onto the rack supply tray 102 of the conveyance unit 101 (step S701), the control unit 134 acquires identification information stored in the identification medium 302A via the specimen information reading device 108 (step S702). This step S702 corresponds to a recognition step. Since the integrated rack 301C as shown in FIG. 7 is also processed in the same way, details thereof are omitted.

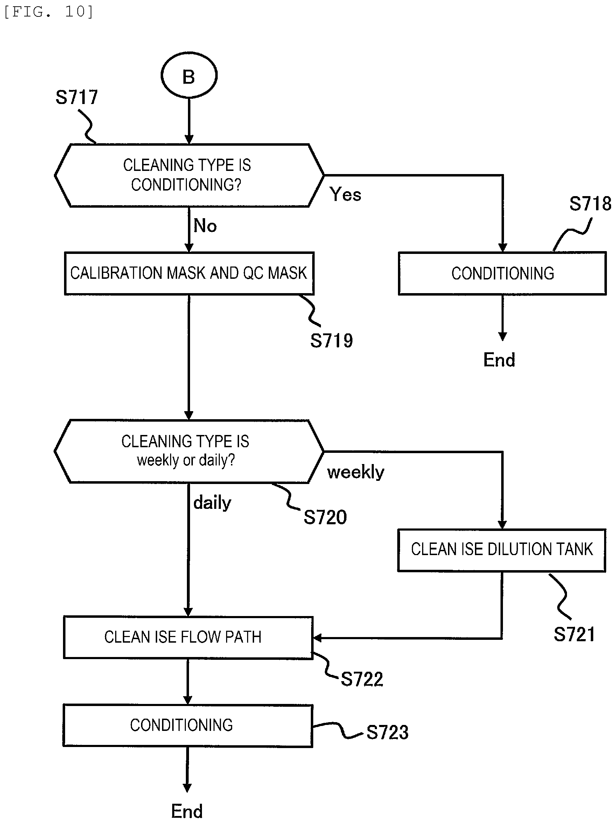

Next, the control unit 134 determines whether the positions 4 and 5 of the integrated rack 301A are mounted with calibrator containers (step S703). When it is determined that the positions 4 and 5 are mounted with calibrator containers, the processing proceeds to step S704, and when it is determined that the positions 4 and 5 are not mounted with calibrator containers, the processing proceeds to step S717 shown in FIG. 10.

The determination in step S703 can be executed by, for example, a method of detecting only whether each position is mounted with a container by the specimen information reading device 108, a method of identifying an identification medium of each container, a method of detecting whether a container is mounted by a specimen container detection mechanism (omitted for convenience of illustration), or the like.

A type of a liquid contained in a container may or may not be specified. Even when the type of the liquid is not specified, since a subsequent calibration result is abnormal in a case where the type of the liquid is erroneous, a countermeasure can be made by notifying an operator of an error at that time point.

Next, the control unit 134 determines whether a cleaning type is conditioning by determining whether only the position 3 is mounted with a container (step S704). When it is determined that only the position 3 is mounted with a container, the processing proceeds to step S705, and when it is determined that the position 1 or the position 2 is also mounted with a container, the processing proceeds to step S707.

The determination in step S704 is also performed by a method similar to that of the previous step S703. Therefore, step S703 and step S704 may be processed at the same time.

Next, the control unit 134 executes a dispensing operation or the like to perform conditioning by using the activator mounted at the position 3 of the integrated rack 301A (step S705).

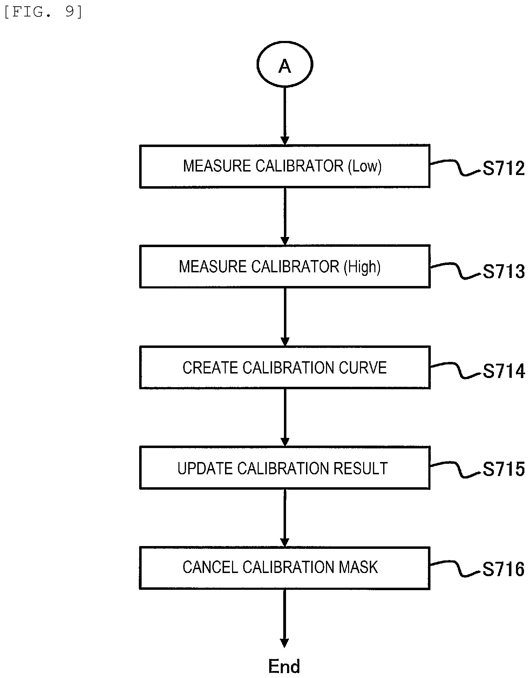

Next, the control unit 134 determines whether calibration is necessary (step S706). When it is determined that the calibration is necessary, the processing proceeds to step S712 shown in FIG. 9, and when it is determined that the calibration is not necessary, the processing is completed.

On the contrary, when it is determined in step S704 that the cleaning type is not conditioning, the control unit 134 then invalidates the previous calibration result and QC result (calibration mask and QC mask) (step S707). In this way, when performing the cleaning solution supply step, the control unit 134 desirably invalidates a measurement result acquired by previously-performed calibration.

Next, the control unit 134 determines whether the cleaning type is weekly or daily (step S708). For example, a case of daily involves only flow path cleaning of ISE, and thus the detergent and the activator may be installed at the positions 2 and 3. A case of weekly involves cleaning of the dilution tank 201 in addition to the operation of daily, and thus the detergents need to be installed at the positions 1 and 2, and the activator needs to be installed at the position 3. Therefore, it is determined that the cleaning type is weekly when the positions 1, 2, and 3 are mounted with cleaning containers, and it is determined that the cleaning type is Daily when the positions 2 and 3 are mounted with cleaning containers without the position 1. When it is determined that the cleaning type is daily, the processing proceeds to step S710, and when it is determined that the cleaning type is weekly, the processing proceeds to step S709.

Next, the control unit 134 cleans the ISE dilution tank 201 by using the detergent at the position 1 (step S709), and causes the processing to proceed to step S710.

Next, the control unit 134 cleans the ISE flow path by using the detergent at the position 2 (step S710).

Next, the control unit 134 causes the activator mounted at the position 3 to execute the conditioning (step S711), and causes the processing to proceed to step S712 shown in FIG. 9.

Steps S704 to S711 described above are the cleaning solution supply step of aspirating the cleaning solution and the accompanying cleaning step.

Next, as shown in FIG. 9, the control unit 134 sequentially executes measurement using the calibrator (low) at the position 4 (step S712) and measurement using the calibrator (high) at the position 5 (step S713). Accordingly, a slope of a calibration curve can be updated and inherited to a next measurement alone. Steps S712 and S713 described above correspond to a supply step of aspirating the calibrator.

In the calibrator supply step, after step S713, it is possible to execute an operation such as dispensing the calibrator at the position 5, which has a higher concentration, again. Accordingly, it is possible to execute full calibration for detecting a shift amount in addition to the slope of the calibration curve.

In the calibrator supply step, after step S713, it is possible to execute an operation such as dispensing the activator at the position 3, or an ISE calibration having a concentration between those of the calibrators at the positions 4 and 5, again. Accordingly, it is possible to execute full calibration for detecting a shift amount of the calibration curve in addition to the slope of the calibration curve.

Next, the control unit 134 creates a calibration curve based on a measurement result in the calibrator supply step (step S714). When the result is determined to be valid, the control unit 134 updates a calibration result (step S715), and then cancels the calibration mask (step S716). The processing of steps S712 to S716 is the calibration step.

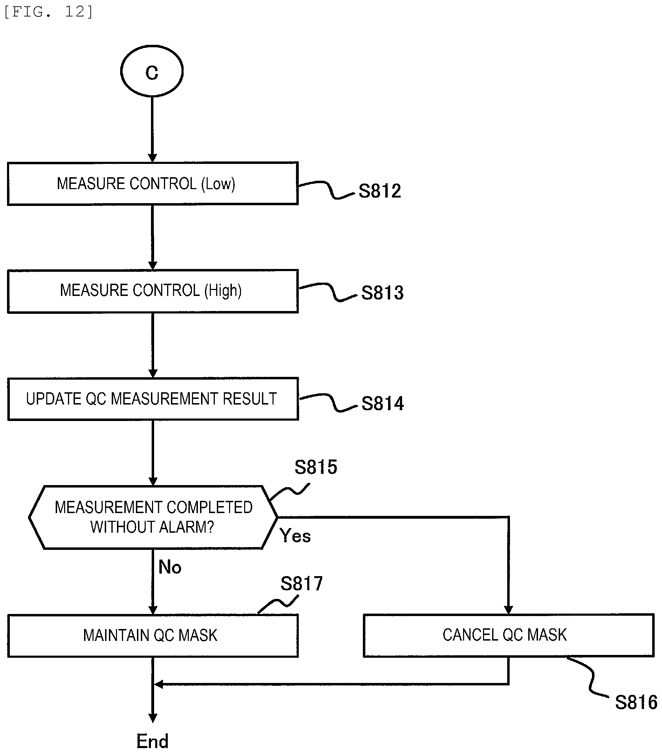

Next, after step S716, the control unit 134 completes the processing by performing a display prompting the user to perform QC, waiting for the QC to be actually performed, or the like. In a case of the integrated rack 301C as shown in FIG. 7, after step S716, the processing can be shifted to step S812 in FIG. 12 described later.

When it is determined in step S703 that the positions 4 and 5 are not mounted with containers, as shown in FIG. 10, the control unit 134 then determines whether the cleaning type is the conditioning as in step S704 (step S717).

Steps S717 to S723 are also the cleaning solution supply step, basically the same as steps S704, S705, and S707 to S711 described above, and details thereof are omitted. A difference is that after step S718, the processing is completed unlike step S705, and after step S723, unlike step S711, the processing is completed by performing a display prompting the user to perform calibration, waiting for the calibration to be actually performed, or the like.

In this case, since the integrated rack 301A, 301C is not mounted with calibrator containers or QC specimen containers, the control unit 134 can discharge the integrated racks 301A and 301C out of the apparatus after the cleaning solution supply step in such a case.

When the integrated rack 301A is recognized, it is desirable that the control unit 134 creates a dispensing plan while regarding a rack to be loaded next to the integrated rack 301A as a control rack mounted with a QC specimen container containing a QC specimen containing a sample having a known concentration.

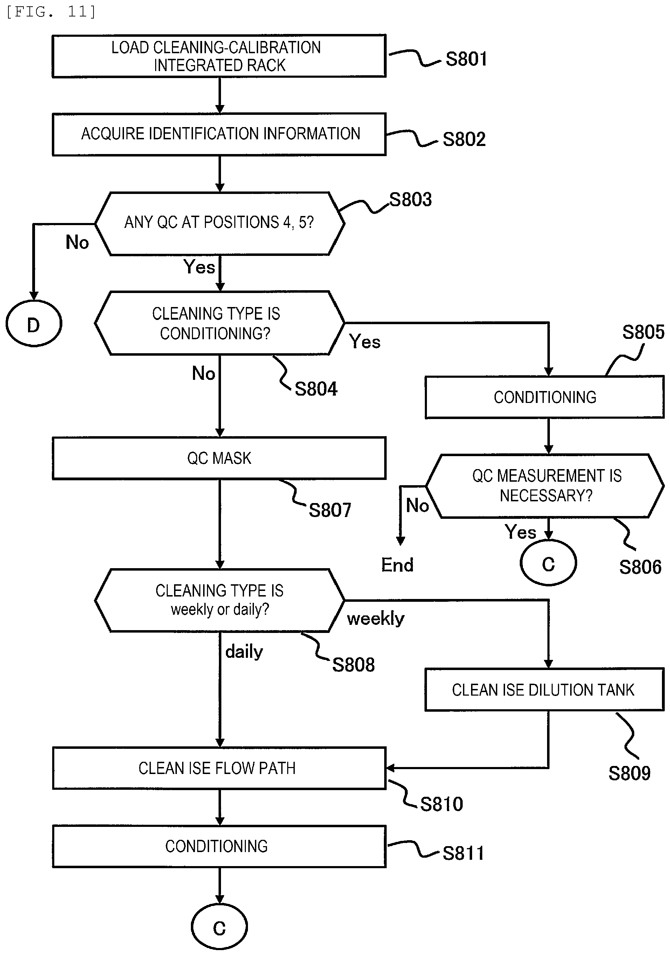

The control unit 134 is configured to execute any step of the processing shown in FIGS. 8 to 10 described above and the processing shown in FIGS. 11 to 13 described later, but can have a form of being able to execute any one of these steps and being able to appropriately select any one of these steps.

Next, a control flow when the cleaning step and a control step according to the present embodiment are continuously performed will be described with reference to FIGS. 11 to 13. FIGS. 11 to 13 are flowcharts showing an example of the cleaning step to the control step when the cleaning-QC integrated rack is conveyed.

As shown in FIG. 11, first, when the integrated rack 301B as shown in FIG. 5 is loaded onto the rack supply tray 102 of the conveyance unit 101 (step S801), the control unit 134 acquires identification information stored in the identification medium 302B via the specimen information reading device 108 (step S802). This step S802 corresponds to the recognition step.

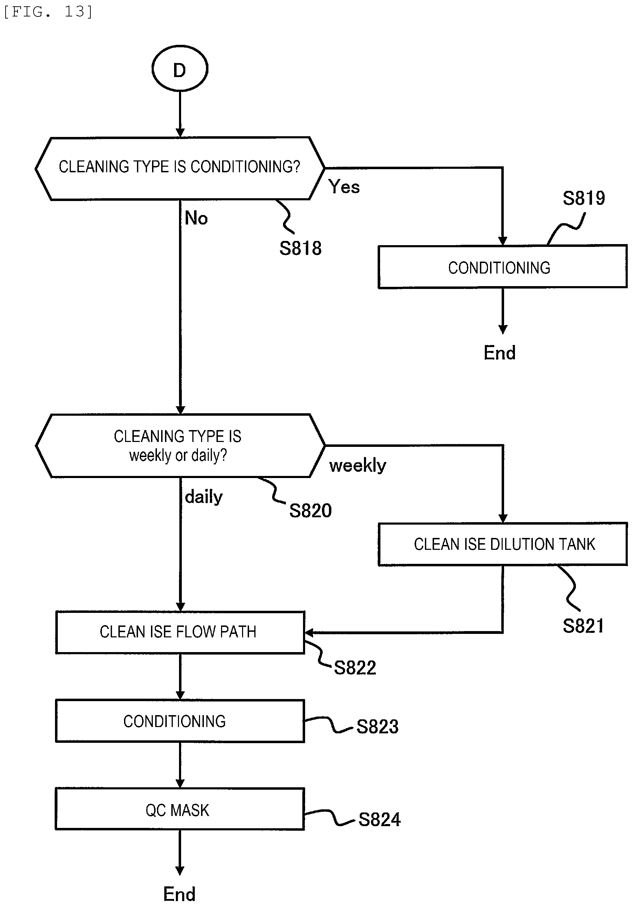

Next, the control unit 134 determines whether the positions 4 and 5 of the integrated rack 301B are mounted with QC specimen containers (step S803). When it is determined that the containers are mounted, the processing proceeds to step S804, and when it is determined that no containers are mounted, the processing proceeds to step S818 shown in FIG. 13.

Next, the control unit 134 determines whether the cleaning type is the conditioning by determining whether only the position 3 is mounted with a container (step S804). When it is determined that only the position 3 is mounted with a container, the processing proceeds to step S805, and when it is determined that the position 1 or the position 2 is mounted with a container, the processing proceeds to step S808.

Steps S805 to S811 are substantially the same as steps S705, S706, and S708 to S711 in FIG. 8 described above, and details thereof are omitted. S804 and S805 to S811 are the cleaning solution supply step.

A difference is that in step S806, it is determined whether QC measurement is necessary, and in step S807, unlike step S707, only the QC mask for invalidating a previous QC result is performed, and the calibration mask is not performed. In this way, when performing the cleaning solution supply step, it is desirable that a measurement result acquired by previously-performed quality control measurement is invalidated, and measurement cannot be resumed until a new QC result is acquired. Step S807 of performing the QC mask may be executed after step S811.

The control unit can subject only a part of the configuration of the analysis unit to be cleaned to control measurement. For example, in a case of the electrolyte measurement unit 200 as in the present embodiment, selectivity of the chloride ion selective electrode 209 may be changed by cleaning, and the slope of the calibration curve may be changed. Therefore, the QC measurement is performed only on the chlorine ion selective electrode 209 among the plurality of electrodes of the electrolyte measurement unit 200 to check that there is no influence of the cleaning, and the sodium ion selective electrode 207 and the potassium ion selective electrode 208 electrode are hardly influenced by the cleaning, so that the QC measurement is not performed.

Next, as shown in FIG. 12, the control unit 134 sequentially executes measurement using the QC specimen (low) at the position 4 (step S812), and measurement using the QC specimen (high) at the position 5 (step S813). Steps S812 and S813 described above correspond to a supply step of aspirating the QC specimen.

Next, the control unit 134 updates a QC measurement result (step S814), and determines whether measurement is completed without an alarm (step S815). When it is determined that the measurement is completed, the processing proceeds to step S816 to cancel the QC mask set in the previous step S811 (step S816), and the processing is ended.

On the contrary, when it is determined that there is an alarm, the processing proceeds to step S817 to maintain the QC mask (step S817), and the processing is ended.

In a case of "maintain QC mask" as in step S817, when the QC measurement is executed again and the measurement is completed without alarm, the QC mask can be canceled. The QC measurement again at this time may be performed using the QC specimens housed in the positions 4 and 5 of the integrated rack 301B identified in step S802, or can also be performed using a QC specimen housed in another newly prepared rack when there is a problem in the QC specimens housed in the rack per se for some reason.

When it is determined that there also is an abnormality in the QC executed again, it is desirable to prompt loading of the calibration rack and perform the full calibration.

Steps S811 to S817 correspond to a QC measurement step.

When it is determined in step S803 that the positions 4 and 5 are not mounted with containers, as shown in FIG. 13, the control unit 134 then determines whether the cleaning type is the conditioning as in step S804 (step S818).

Steps S818 to S824 are also the cleaning solution supply step, basically the same as steps S804, S805, and S808 to S811 described above, and details thereof are omitted.

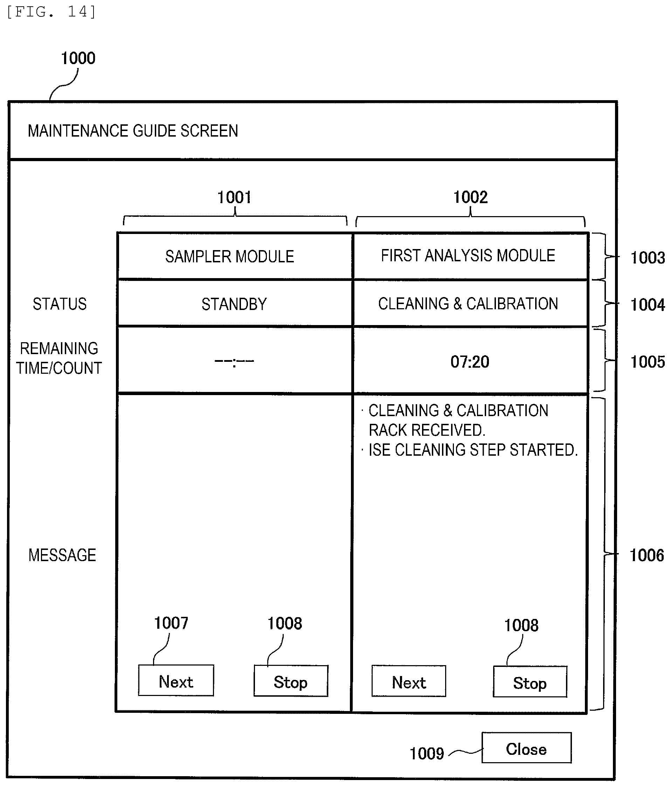

Next, a maintenance guide screen of the automatic analysis apparatus according to the present embodiment will be described with reference to FIG. 14. FIG. 14 is a diagram showing an example of the maintenance guide screen.

A maintenance guide screen 1000 shown in FIG. 14 is a screen displayed on an operation screen of the display unit 131 of the operation unit 130. As shown in FIG. 14, the maintenance guide screen 1000 includes a sampler module display region 1001, an analysis module display region 1002, and a close button 1009.

The sampler module display region 1001 shown in FIG. 14 is a region for displaying maintenance guidance of the conveyance unit 101 shown in FIG. 1, and the analysis module display region 1002 is a region for displaying maintenance guidance of the analysis unit 111 shown in FIG. 1.

The module display regions respectively display a module name display region 1003, a status display region 1004, a remaining time/count information display region 1005, a guidance information display region 1006, a next button 1007, and a stop button 1008.

The module name display region 1003 displays a unique name for identifying each module.

The status display region 1004 displays a status of a device of a corresponding module (device state).

The remaining time/count information display region 1005 displays a remaining time of a maintenance operation of each corresponding module, or the number of times of an operation count of a check function for performing a repeated operation. FIG. 14 shows, as an example, an example in which information on the remaining time is displayed in the remaining time/count information display region 1005.

A case where a remaining time is displayed in the remaining time/count information display region 1005 is desirably a case where a maintenance operation is executed in which a time until end is fixed, or a case where the number of times of repetitions and each operation are fixed and an operation is executed in which a time until end is determined in advance.

A case where the number of times of operations is displayed is desirably a case where an end time of the maintenance operation is not determined. It is a case where an operation is executed in which a time until end of maintenance is not determined in advance such as a case where the number of times of operations is not determined the operation is executed 100 times at a certain timing A and the operation is executed 10 times at a certain timing B, or a case where a time of each operation is not fixed.

The guidance information display region 1006 displays guidance to be provided to the operator for a maintenance operation of a corresponding module.

The next button 1007 is a selection region for transitioning to a next step for a maintenance operation of a corresponding module. Further, the stop button 1008 is a selection region for interrupting a maintenance operation for a maintenance operation of a corresponding module.

It is desirable that the stop button 1008 can be pressed when a situation in which it is necessary to interrupt each maintenance is reached. It is desirable that the stop button 1008 is always valid during a maintenance-performing period, and maintenance can be interrupted when the stop button 1008 is pressed.

For example, in the maintenance guide screen 1000 shown in FIG. 14, when the operator selects the stop button 1008 to stop maintenance of a specific module, a confirmation screen (not shown) is displayed as a pop-up.

The confirmation screen shows a message for confirming whether maintenance should be stopped and which module an instruction is for.

After confirming the confirmation screen, the operator can select whether to continue the stop or cancel the stop. Accordingly, it is possible to prevent the operator from giving an unintended instruction to stop maintenance on a module due to an operation error or the like.

In contrast, it is desirable that the next button 1007 is configured to be valid (can be pressed) only in a situation in which a necessary operation is completed and a next proceeding is possible. Accordingly, it is possible to prevent a situation in which the processing erroneously proceeds to a next step in the middle of a maintenance operation.

The guidance information display region 1006 described above displays progress in maintenance of each module on the maintenance guide screen 1000, and the next button 1007 and the stop button 1008 can independently control a maintenance operation of each module.

Next, effects of the present embodiment will be described.

In the automatic analysis apparatus 100 of the present embodiment described above, when the integrated racks 301A and 301C mounted with the cleaning solution container containing the cleaning solution and the calibrator container containing the calibrator are recognized, after the cleaning solution supply step of aspirating the cleaning solution, the calibrator supply step of aspirating the calibrator or the control measurement step of aspirating the QC specimen is continuously performed from the cleaning solution container and the calibrator container mounted on the integrated rack 301A, 301C.

Accordingly, both the cleaning and the calibration can be performed in one rack, so that it is possible to reduce a burden on the user in labor and time for cleaning a fluid system of the apparatus and for subsequent calibration in a case of executing periodic maintenance. Further, a time required until next analysis can be shortened.

The automatic analysis apparatus 100 is configured such that when recognizing the integrated rack 301B, 301C mounted with the cleaning solution container containing the cleaning solution and the QC specimen container containing the QC specimen containing the sample having the known concentration, after the cleaning solution supply step of aspirating the cleaning solution, the control measurement step of aspirating the QC specimen is continuously performed from the cleaning solution container and the QC specimen container mounted on the integrated rack 301B, 301C.

According to such a configuration, for a user of a facility where an operation is performed such that the calibration is normally seldom performed and the calibration is performed again only when a result of control measurement is outside a predetermined range, the steps of the cleaning and the control measurement can be continuously performed with one rack, and the burden on the user in the labor and the time can be reduced. Further, a time required until next analysis can be shortened.

These forms are provided with a conveyance mechanism that conveys a rack mounted with the container containing a specimen or a cleaning solution, and are suitable for an automatic analysis apparatus of a type in which installation on the conveyance device is performed by the user.

When performing the cleaning solution supply step, since the control unit 134 invalidates the measurement result acquired by the previously-performed calibration or the measurement result acquired by the previously-performed quality control measurement, even when an analysis result is influenced by a change in a state such as cleanliness of the apparatus due to the cleaning, analysis cannot be executed due to the invalidation processing, so that a situation in which a calibration curve or the like before the cleaning is used can be avoided, and analysis accuracy can be kept high.

Further, when the integrated rack 301A, 301B, 301C is not mounted with a calibrator container or a QC specimen container, the control unit 134 can reliably execute only cleaning by discharging the integrated rack 301A, 301B, 301C out of the apparatus after the cleaning solution supply step. Further, it is possible to perform subsequent calibration and QC preparation during cleaning, and it is possible to shorten a time required until the analysis is resumed.

Since the integrated rack 301C is configured to mount the cleaning solution container, the calibrator container, and the QC specimen container containing the QC specimen containing the sample having the known concentration, all the steps from the cleaning to the control measurement can be continuously performed by one rack, so that convenience of the user can be further improved.

Further, since only a part of the configuration of the analysis unit to be cleaned is subjected to control measurement, the QC measurement is performed only at a necessary portion, so that a time until analysis is resumed can be further shortened.

When the integrated rack 301A is recognized, the control unit 134 creates the dispensing plan while regarding the rack to be loaded next to the integrated rack 301A as the control rack mounted with the QC specimen container containing the QC specimen containing the sample having the known concentration, so that QC specimen measurement is executed early and it is possible to further shorten a time required for analysis to be resumed.

Further, when two or more calibrator containers can be mounted on the integrated rack 301A, 301C, in the calibrator supply step, calibration can be executed in accordance with an operation of the apparatus and required accuracy by dispensing one having a higher concentration among the calibrators after dispensing one having a lower concentration among the calibrators, and then dispensing the one having the higher concentration among the calibrators again, dispensing the one having the higher concentration among the calibrators after dispensing the one having the lower concentration among the calibrators, and then dispensing a cleaning solution for the conditioning of the cleaning container, or dispensing the one having the higher concentration among the calibrators after dispensing the one having the lower concentration among the calibrators.

When two or more QC specimen containers can be mounted on the integrated rack 301B, 301C, in the control measurement step, whether a calibration result can be inherited can be grasped by the QC specimen measurement by dispensing one having a higher concentration among the QC specimens after dispensing one having a lower concentration among the QC specimens, and the processing is very suitable for a user who performs an operation in which the steps until calibration is unnecessary.

Further, since the cleaning solution container and either one of the calibrator container or the QC specimen container are housed at the predetermined positions determined in advance of the integrated rack 301A, 301B, 301C, it is possible to obtain an effect that it is not necessary to provide an identification medium such as a label for each container.

### <Others>

The present invention is not limited to the embodiment described above, and various modifications and applications are possible. The above-described embodiment has been described in detail in order to make the present invention easy to understand, and the present invention is not necessarily limited to those which have all the configurations described.

### Reference Signs List

100 automatic analysis apparatus
101 conveyance unit
102 rack supply tray
103 rack buffer
104 specimen rack
104a specimen container
104b, 104c label
106 conveyance line
107 rack storage tray
108 specimen information reading device (identification device)
111 analysis unit
112 specimen dispensing line
115 reaction disk
116 reagent dispensing nozzle
117 reagent disk
118 colorimetric measurement unit
130 operation unit
131 display unit
132 input unit
133 recording unit
134 control unit
200 electrolyte measurement unit
201 dilution tank
202 specimen dispensing nozzle
203 diluted solution dispensing nozzle
204 internal standard solution dispensing nozzle
205 sample solution aspiration nozzle
206 pipe
207 sodium ion selective electrode
208 potassium ion selective electrode
209 chlorine ion selective electrode
210 reference electrode
211 pipe
212 sipper syringe
213 potential measurement unit
214 diluted solution container
215 internal standard solution container
216 temperature control unit
217 comparison electrode solution container
218 diluted solution syringe
219 internal standard solution syringe
220 valve
221 waste solution portion
301A, 301B, 301C integrated rack
302A, 302B, 302C identification medium
1000 maintenance guide screen
1001 sampler module display region
1002 analysis module display region
1003 module name display region
1004 status display region
1005 remaining time/count information display region
1006 guidance information display region
1007 next button
1008 stop button
1009 close button

## Claims

1. An automatic analysis apparatus comprising:
an identification device configured to identify a rack attached with identification information; and
a control unit configured to control an operation of dispensing a liquid contained in a container housed in the rack based on information on the rack identified by the identification device, wherein
when recognizing an integrated rack mounted with a cleaning solution container containing a cleaning solution and a calibrator container containing a calibrator, after a cleaning solution supply step of aspirating the cleaning solution, the control unit causes to continuously perform a calibrator supply step of aspirating the calibrator from the cleaning solution container and the calibrator container mounted on the integrated rack.

2. An automatic analysis apparatus comprising:
an identification device configured to identify a rack attached with identification information; and
a control unit configured to control an operation of dispensing a liquid contained in a container housed in the rack based on information on the rack identified by the identification device, wherein
when recognizing an integrated rack mounted with a cleaning solution container containing a cleaning solution and a QC specimen container containing a QC specimen containing a sample having a known concentration, after a cleaning solution supply step of aspirating the cleaning solution, the control unit causes to continuously perform a control measurement step of aspirating the QC specimen from the cleaning solution container and the QC specimen container mounted on the integrated rack.

3. The automatic analysis apparatus according to claim 1, wherein
when performing the cleaning solution supply step, the control unit invalidates a measurement result acquired by previously-performed calibration.

4. The automatic analysis apparatus according to claim 1 or 2, wherein
when performing the cleaning solution supply step, the control unit invalidates a measurement result acquired by previously-performed quality control measurement.

5. The automatic analysis apparatus according to claim 1 or 2, wherein
when the calibrator container or the QC specimen container is not mounted on the integrated rack, the control unit discharges the integrated rack out of the apparatus after the cleaning solution supply step.

6. The automatic analysis apparatus according to claim 1, wherein
the integrated rack is configured to mount the cleaning solution container, the calibrator container, and a QC specimen container containing a QC specimen containing a sample having a known concentration.

7. The automatic analysis apparatus according to claim 2, wherein
only a part of a configuration of an analysis unit to be cleaned is to be subjected to control measurement.

8. The automatic analysis apparatus according to claim 1, wherein
when recognizing the integrated rack, the control unit creates a dispensing plan while regarding a rack to be loaded next to the integrated rack as a control rack mounted with a QC specimen container containing a QC specimen containing a sample having a known concentration.

9. The automatic analysis apparatus according to claim 1, wherein
when two or more calibrator containers are mounted on the integrated rack,
in the calibrator supply step, one having a higher concentration among the calibrators is dispensed after one having a lower concentration among the calibrators is dispensed, and then the one having the higher concentration among the calibrators is dispensed again.

10. The automatic analysis apparatus according to claim 1, wherein
when two or more calibrator containers are mounted on the integrated rack,
in the calibrator supply step, one having a higher concentration among the calibrators is dispensed after one having a lower concentration among the calibrators is dispensed, and then a cleaning solution for conditioning of the cleaning container is dispensed.

11. The automatic analysis apparatus according to claim 1, wherein
when two or more calibrator containers are mounted on the integrated rack,
in the calibrator supply step, one having a higher concentration among the calibrators is dispensed after one having a lower concentration among the calibrators is dispensed.

12. The automatic analysis apparatus according to claim 2, wherein
when two or more QC specimen containers are mounted on the integrated rack,
in the control measurement step, one having a higher concentration among the QC specimens is dispensed after one having a lower concentration among the QC specimens is dispensed.

13. A maintenance method in an automatic analysis apparatus including an identification device configured to identify a rack attached with identification information, and a control unit configured to control an operation of dispensing a liquid contained in a container housed in the rack based on information on a rack identified by the identification device, the maintenance method in an automatic analysis apparatus comprising:
a recognition step of recognizing an integrated rack mounted with a cleaning solution container containing a cleaning solution, and a calibrator container containing a calibrator or a QC specimen container containing a QC specimen containing a sample having a known concentration;
a cleaning solution supply step of aspirating the cleaning solution; and
a supply step of aspirating the calibrator or the QC specimen, wherein
the cleaning solution supply step and the supply step are continuously performed from the cleaning solution container and the calibrator container or the QC specimen container mounted on the integrated rack.

14. The maintenance method in an automatic analysis apparatus according to claim 13, wherein
the cleaning solution container and either one of the calibrator container or the QC specimen container are housed in predetermined positions determined in advance of the integrated rack.
